# EUROPEAN PATENT APPLICATION

(11) **EP 4 275 781 A1**
(43) Date of publication of application: **15.11.2023**
(21) Application number: 23172616.7
(22) Date of filing: 10.05.2023
(51) Int. Cl.: B01D 46/71, B01D 46/76, C02F 1/04, C02F 101/10, C02F 103/24

(54) **METHOD AND PLANT FOR PURIFYING INDUSTRIAL WASTEWATER WITH HIGH SALT CONTENT**

(30) Priority: 10.05.2022 IT 202200009569
(71) Applicant: Botti Adriano E C. - Società in Accomandita Semplice, 41037 Mirandola Modena (IT)
(72) Inventor: Botti, Matteo, 41037 Mirandola (IT)
(74) Representative: Luppi Intellectual Property S.r.l.

(57) **Abstract**

A method for purifying a liquid coming from industrial processes, containing salts in solution, comprises the following steps:
- filtering a liquid to be purified containing salts in solution, to eliminate solids suspended in the liquid;
- nebulizing the liquid to be purified;
- making the liquid interact with a flow of heated air up to a temperature sufficient to cause possible organic substances contained in said liquid to dry and making the nebulized liquid evaporate, so as to obtain a steam containing suspended particles of said salts;
- sending said steam through a filter configured to retain the particles of said salts suspended in the steam;
- discharging into the atmosphere the steam after the steam has passed through said filter, or condensing the steam after the steam has passed through said filter;
- collecting the particles of said salts retained by the filter.

A plant (1) for purifying a liquid coming from industrial processes, with salts in solution, comprises:
- at least one atomizing device (7) comprises a body (9) inside which a chamber (10) is defined, wherein said body (9) is provided with an input opening (16) and with a discharge opening (13);
- nebulizing means (8) suitable for nebulizing said liquid to be purified and introducing the liquid into said chamber (10);
- at least one heating device (18) configured to heat air to be introduced into said chamber (10);
- a supply conduit (17) that connects said at least one heating device (18) to said input opening (16);
- a discharge conduit, which connects said discharge opening (14) to a filter (20) configured to retain particles of said salts in suspension in a steam produced by vaporization of said liquid to be purified in said atomizing device (7);
- a discharge flue (23), or a condenser, connected to said filter (20).

## Description

The present invention relates to a method and a plant for purifying industrial wastewater containing large amounts of salts in solution.

The wastewater resulting from industrial processes is normally highly polluting, in particular when they possess a high content of salts in solution, and cannot be discharged into sewers but have to be sent to special treatment plants, which entails high treatment costs for the business producing the wastewater and the impossibility of reusing the salts dissolved in said waters, with a resulting significant increase in production costs.

One object of the present invention is to provide a method and a plant for purifying industrial wastewater with a high salt content that can be used in the industrial plant producing the wastewater.

Another object of the present invention is to obtain, after purification, wastewater that can be discharged directly into the sewer system, or can be re-used in industrial processes.

A further object of the present invention is to recover, for subsequent re-use or sale, the salts dissolved in said wastewater.

The plant according to the invention will moreover have to be structurally simple and have low running costs.

The objects of the invention are achieved with a method according to claim 1 and with an apparatus according to claim 7.

Owing to the invention, it is possible to purify industrial wastewater with high salt content in the same place in which it is produced without it being necessary to collect and send wastewater to businesses specializing in industrial wastewater treatment, with significant cost savings.

Owing to the invention, it is further possible to recover the salts dissolved in the wastewater, to reuse the salts or possibly sell the salts, with further cost savings.

The invention further enables purified water to be obtained that can be discharged directly into the sewers or which can be used for industrial processes, without further treatment being necessary.

The method and the plant according to the invention are suitable, in particular, for treating wastewater with a high sodium chloride content, like, for example, the water produced by plants for conserving animal skins by salting or placing in brine.

The invention will be disclosed with reference to the purification of wastewater coming from a plant for conserving by salting skins of animals that have just been butchered in order to conserve the skins before sending the skins to a tannery.

It must however be understood that the plant according to the invention is also usable for treating wastewater of industrial processes containing, in solution, salts other than sodium chloride.

One embodiment of the invention is disclosed below with reference to the appended drawings, in which:

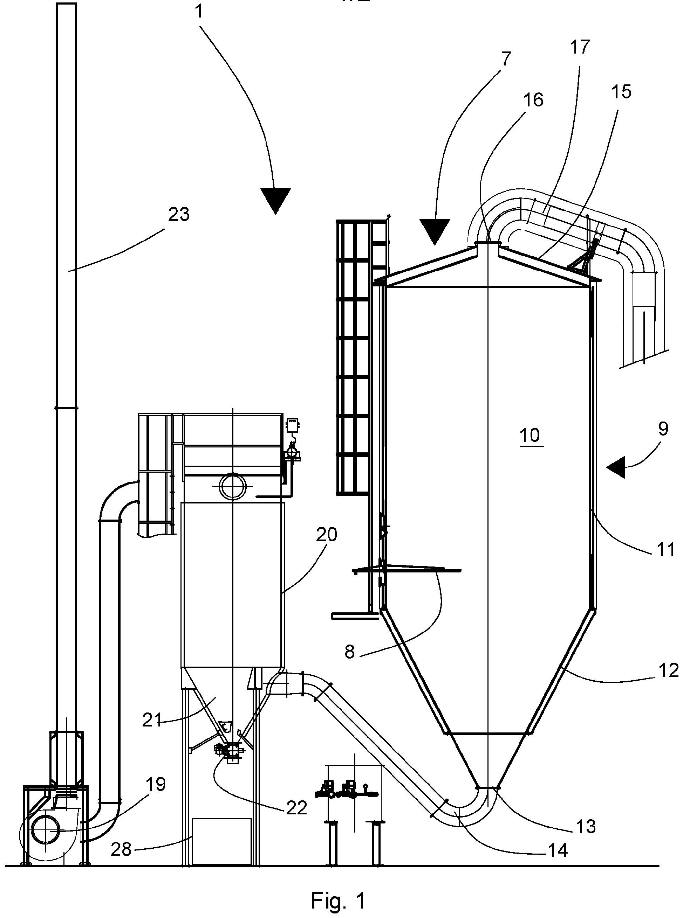

Figure 1 is an elevation schematic view of a plant according to the invention;

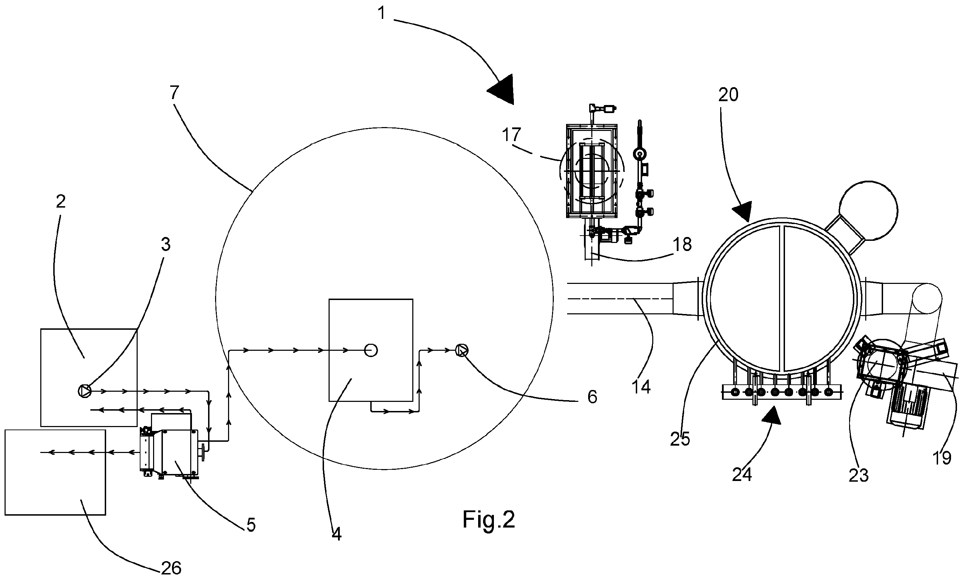

Figure 2 is a very schematic plan view of the plant of Figure 1;

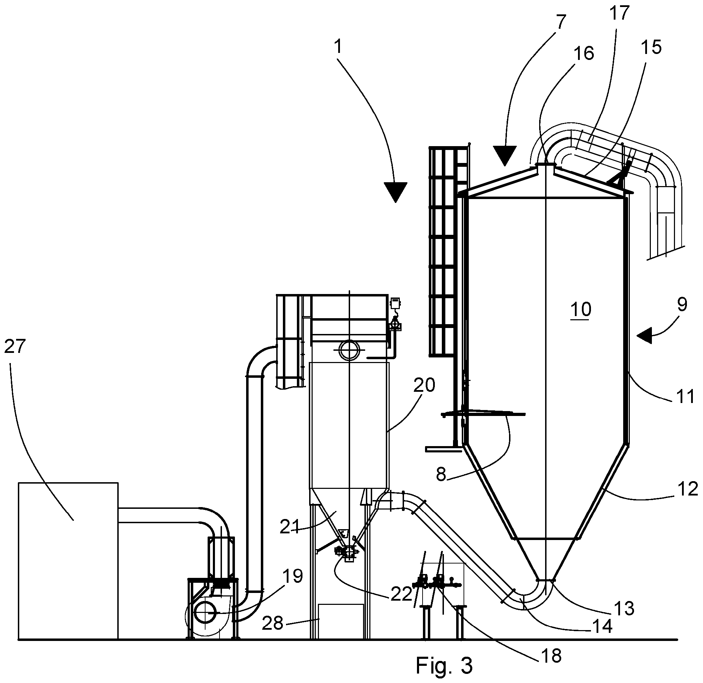

Figure 3 is an elevation schematic view of a variant of the plant of Figure 1.

The plant 1 according to the invention, in the disclosed embodiment, is supplied with a liquid to be treated, for example wastewater deriving from salt treatment with sodium chloride of skins of animals that have just been butchered in order to preserve skins before they are taken to a tannery. The sodium chloride granulometry used in the skins salting treatment can be comprised, for example, between about 1 mm and about 3 mm.

The quantity of salts in solution, which in the example described is about 98% sodium chloride, contained in said wastewater can be comprised between about 30 g/l to about 280 g/l.

The wastewater further contains organic substances and dirt in general coming from the treated skins.

The liquid to be treated is first stored in a collecting well 2, from which it is subsequently removed by a first pump 3, which sucks the liquid from the collecting well 2 and sends the liquid to a tank 4, passing the liquid through a filtering device 5, for example a rotating drum filter, which retains the solid particles suspended in the liquid. The solid particles retained by the filtering device 5 are discharged into a collecting container 26.

The liquid contained in the tank 4 is removed by a second pump 6 and sent to an atomizing device 7, into which the liquid is introduced by nebulizing means 8. The atomizing device 7 comprises a body 9 inside which a chamber 10 is defined, into which the nebulizing means 8 introduces the finely nebulized liquid to be treated, for example with drops having an average radius of the order of 10 µm.

The body 9 has a first cylindrical body part 11 and a second frustoconical body part 12 placed below the first cylindrical body part 11. The second frustoconical body part 12 ends below with a discharge opening 13, which communicates with a discharge conduit 14.

The first cylindrical body part 11 is closed above by a lid 15, which is provided with an input opening 16 through which high temperature hot air can be introduced to the chamber 10.

The input opening 16 is connected to a hot air supply conduit 17, which is introduced into the conduit 17 after being heated by a heating device 18, for example an air vein burner.

The nebulizing means can comprise one or more nebulizing nozzles 8, arranged in the cylindrical part of the body 9, or a rotating turbine arranged at the top of the chamber 10, near the input opening 16 of the hot air.

The hot air introduced into the chamber 10 has a temperature that can reach beyond 300 °C, for example between about 300 °C and about 700 °C.

The high temperature of the air introduced into the chamber 10 causes immediate evaporation of the liquid introduced into the chamber 10 by the one or more atomizing nozzles and further causes drying of the organic substances contained in said liquid, whilst the salt in solution in the liquid separates therefrom and remains suspended in the steam generated by the evaporation of the liquid, in the form of particles with granulometry of a few tenths of a micron, as will be specified below. The salt consists almost exclusively of sodium chloride, which also constitutes over 98% by weight of said salt.

The steam generated by the evaporation of the liquid, with the particles of salt that are suspended therein, is sucked by a fan 19 through the discharge opening 13 and the discharge conduit 14.

The steam passes through a filter 20, for example a bag filter, which retains the particles of salt in suspension in the steam.

The salt collects in the lower part 21 of the filter 20 from which the salt can be discharged by a discharging device 22, for example by a blade rotor, and collected in a collecting container 28.

The steam, after being sucked by the fan 19 is discharged into the atmosphere via a discharge flue 23 connected to the delivery of the fan 19.

The steam can be discharged directly into the atmosphere because it does not contain polluting substances. In fact, organic substances and other possible polluting substances contained in the liquid subjected to the purifying treatment have been burned in the atomizer 7 through the effect of the high temperature of the air introduced into the atomizer 7. Alternatively, the steam can be condensed in a condenser 27, to recover water and heat to be used in industrial processes.

The filter 20 is associated with a plurality of nozzles 24 by which pressurized air jets can be directed to a filtering surface 25 of the filter 20, to which the salt retained by the filter 20 adheres. The pressurized air jets are used to cause the particles of salt to detach from said filtering surface 25, to avoid clogging of the filtering surface 25 and drop the particles of salt into the lower part 21 of the filter 20.

The salt can also be detached from the filtering surface 25 of the filter 20 by using vibrating means that transmits mechanical vibrations to the filter 20 to vibrate the filtering surface 25 and cause the particles of salt to detach from the filtering surface 25 and fall into the lower part 21 of the filter 20.

With reference to what has been disclosed previously, the method according to the invention comprises the following steps:
filtering the liquid to be purified, to eliminate from the liquid solid particles in suspension in the liquid;
nebulizing a liquid to be purified, containing salts in solution;
making the liquid interact with a flow of hot air having a sufficient temperature to evaporate the liquid to obtain a steam containing in suspension particles of said salts;
sending the steam through a filter configured to retain the particles of said salts in suspension in the steam;
discharging the filtered steam into the atmosphere;
collecting the particles of said salts retained by the filter.

The method according to the invention can further comprise heating said air up to a temperature comprised between about 300 °C and about 700° C, to obtain almost instantaneous evaporation of the nebulized liquid.

The method according to the invention can also comprise sending jets of compressed air to a filtering surface of said filter, to facilitate detaching of the particles of salt from said filtering surface, or transmit mechanical vibrations to said filter to vibrate the filtering surface of the filter, facilitating detaching of the particles of salt from said filtering surface.

The salt obtained by filtering the steam produced by evaporation of the liquid to be treated, which evaporation occurred in the atomizer, has very fine granulometry, which makes the salt very valuable on the market. In fact, whereas at the start of salting treatment of the skins the salt had a granulometry comprised between about 1 mm and about 3 mm, about 99% of the salt obtained by filtering the steam generated in the atomizer has granulometry that is not greater than 100 µm, about 70% of the salt has granulometry not above 50 µm and about 16% of the salt has granulometry below 20 µm.

## Claims

1. Method for purifying a liquid coming from industrial processes, wherein said liquid contains salts in solution, **characterized in that** it comprises the following steps:
- filtering said liquid to eliminate solid particles suspended in the liquid;
- nebulizing said liquid;
- making the liquid interact with a flow of air heated up to a temperature that is sufficient to cause drying of possible organic substances contained in said liquid and evaporate the nebulized liquid, so as to obtain a steam containing in suspension particles of said salts;
- sending said steam through a filter configured to retain the particles of said salts suspended in the steam;
- discharging into the atmosphere the steam after the steam has passed through said filter, or condensing the steam after the steam has passed through said filter;
- collecting the particles of said salts retained by the filter.

2. Method according to claim 1, further comprising heating said air up to a temperature comprised between about 300°C and about 700 °C.

3. Method according to one of the preceding claims, further comprising directing jets of compressed air on a filtering surface of said filter, or transmitting mechanical vibrations to said filter to make said filtering surface vibrate.

4. Method according to one of the preceding claims, wherein a quantity of salts in solution in said liquid to be purified is comprised between about 30 g/l and about 180 g/l.

5. Method according to one of the preceding claims, wherein about 99% of the particles of said salts obtained from purifying said liquid has a granulometry below 100 µm, about 70% of the particles has a granulometry no greater than 50 µm and about 16% of the particles has a granulometry below 20 µm.

6. Plant (1) for purifying a liquid coming from industrial processes, wherein the liquid to be purified contains salts in solution, **characterized in that** it comprises:
- a filtering device (5) configured to retain solid particles suspended in the liquid;
- at least one atomizing device (7) comprises a body (9) inside which a chamber (10) is defined, wherein said body (9) is provided with an input opening (16) and with a discharge opening (13);
- nebulizing means (8) suitable for nebulizing said liquid to be purified and introducing the liquid into said chamber (10);
- at least one heating device (18) configured to heat air to be introduced into said chamber (10);
- a supply conduit (17) that connects said at least one heating device to said input opening (16);
- a filter (20) configured to retain particles of said salts in suspension in a steam produced by vaporization of said liquid to be purified in said atomizing device (7);
- a discharge conduit (14) that connects said discharge opening (13) to said filter (20);
- a collecting container (28) configured to collect said particles retained by said filter (20);
- a discharge flue (23) connected to said filter (20), or a condenser (27) connected to said filter.

7. Plant according to claim 6, further comprising a collecting well (2) for said liquid to be purified, a first pump (3) configured to suck the liquid to be purified from the collecting well (2) and send the liquid to be purified to a tank (4), passing the liquid to be purified through a filtering device (5).

8. Plant according to claim 7, further comprising a collecting container (26), intended to receive solid particles that are suspended in said liquid to be purified and are captured by said filtering device (5).

9. Plant according to claim7, or 8, further comprising a second pump (6) configured to suck the liquid to be purified from said tank (4) and send the liquid to be purified to the at least one atomizing device (7).

10. Plant according to one of claims 6 to 9, further comprising a fan (19) configured to suck from said chamber (10) the steam produced by the vaporization of said liquid to be purified in said at least one atomizing device (7), to pass said steam through said filter (20) and send said steam to said discharge flue (23), or to said condenser (27).

11. Plant according to one of claims 6 to 10, wherein said filter (20) is provided with a discharging device (22) configured to discharge from said filter (20) into said collecting container (28) the particles of salt collected into a lower part (21) of the filter (20).

12. Plant according to one of claims 6 to 11, wherein the filter (20) is associated with a plurality of nozzles (24) by means of which pressurized air jets can be directed to a filtering surface (25) of the filter (20).

13. Plant according to one of claims 6 to 11, wherein the filter (20) is associated with vibrating means configured to make a filtering surface (25) of the filter (20) vibrate.
